(19) Europäisches Patentamt
European Patent Office
Office européen des brevets

(11)  **EP 4 156 440 B1**

(12)  **EUROPEAN PATENT SPECIFICATION**

(45) Date of publication and mention
of the grant of the patent:
**04.09.2024  Bulletin 2024/36**

(21) Application number: **22196586.6**

(22) Date of filing: **20.09.2022**

(51) International Patent Classification (IPC):
**H02J 3/18** (2006.01)     **H02J 3/01** (2006.01)
**H02M 7/483** (2007.01)     **H02M 1/12** (2006.01)

(52) Cooperative Patent Classification (CPC):
**H02J 3/1857; H02J 3/01; H02M 7/4835**

(54) **POWER CONVERSION APPARATUS**

LEISTUNGSWANDLER

APPAREIL DE CONVERSION DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **24.09.2021  JP 2021155818**

(43) Date of publication of application:
**29.03.2023  Bulletin 2023/13**

(73) Proprietor: **Carrier Japan Corporation
Tokyo 141-0032 (JP)**

(72) Inventors:
• **NISHIO, Motoki**
**Shizuoka, 416-8521 (JP)**
• **KUBOTA, Yohei**
**Shizuoka, 416-8521 (JP)**
• **ARAI, Takuro**
**Kanagawa, 212-8585 (JP)**

(74) Representative: **Gramm, Lins & Partner
Patent- und Rechtsanwälte PartGmbB
Frankfurter Straße 3 C
38122 Braunschweig (DE)**

(56) References cited:
**EP-A1- 4 123 412     WO-A1-2021/186524
CN-A- 111 384 716**

• **MINYUAN GUAN ET AL: "Modeling and Control
of a Modular Multilevel Converter-Based HVDC
System Under Unbalanced Grid Conditions",
IEEE TRANSACTIONS ON POWER
ELECTRONICS, INSTITUTE OF ELECTRICAL
AND ELECTRONICS ENGINEERS, USA, vol. 27,
no. 12, 1 December 2012 (2012-12-01), pages 4858
- 4867, XP011453006, ISSN: 0885-8993, DOI:
10.1109/TPEL.2012.2192752**
• **HUANG H ET AL: "Active harmonic current
elimination and reactive power compensation
using modular multilevel cascaded converter",
2017 19TH EUROPEAN CONFERENCE ON
POWER ELECTRONICS AND APPLICATIONS
(EPE'17 ECCE EUROPE), JOINTLY OWNED
IEEE-PELS AND EPE ASSOCIATION, 11
September 2017 (2017-09-11), XP033250348, DOI:
10.23919/EPE17ECCEEUROPE.2017.8098966**

## Description

FIELD

Embodiments described herein relate generally to a power conversion apparatus that is connected to each of power supply lines of a three-phase AC power supply to which a load is connected, in parallel with the load.

BACKGROUND

A power conversion apparatus such as an active filter, connected to each power supply line of a three-phase AC power supply to which a load of an electric apparatus or the like is connected, in parallel with the load, to suppress harmonic components included in a current flowing in the load, is known (for example, JP 5871832 B).

WO 2021/186524 A1 discloses a power conversion apparatus configured to connect to power supply lines of a three-phase AC power supply to which a load is connected, in parallel with the load, includes a multi-level converter and a controller. The multi-level converter includes clusters configured to connect to each of the power supply lines. The controller is configured to detect harmonic components of load currents flowing to the load, obtain compensation currents made to flow to each of the power supply lines to suppress the harmonic components of the load currents flowing to the load, and control output voltages of the clusters of the multi-level converter to obtain the compensation currents.

CN 111 384 716 A discloses a seven-level static synchronous compensator based on an unbalanced power grid.

Minyuan Guan et al: "Modeling and Control of a Modular Multilevel Converter-Based HVDC System Under Unbalanced Grid Conditions", IEEE Transactions on Power Electronics, vol. 27, no. 12, pages 4858-4867, shows a zero-sequence current controller for modular multilevel converters in HVDC applications under unbalanced grid conditions.

Huang H et al: "Active harmonic current elimination and reactive power compensation using modular multilevel cascaded converter", 2017 19th European Conference on Power Electronics and Applications (EPE'17 ECCE Europe), shows an application of modular multilevel cascaded converters for combined active harmonic current elimination and reactive power compensation in a power distribution line.

When unbalance occurs in the voltage of the three-phase AC power supply, unbalance occurs in each phase current flowing between each power supply line and the power conversion apparatus. When unbalance occurs in each phase current flowing between each power supply line and the power conversion apparatus, the currents concentrate in the switch elements and capacitors of a specific phase in the power conversion apparatus, which may lead to the destruction of the switch elements and a decrease in the life of the capacitors.

BRIEF DESCRIPTION OF THE DRAWINGS

FIG. 1 is a block diagram showing a power topology that could implement an embodiment of the present invention.
FIG. 2 is a diagram showing a configuration of a zero crossing point detection circuit of a power supply voltage in the topology of FIG. 1.
FIG. 3 is a chart showing a zero crossing point detection signal in FIG. 2.
FIG. 4 is a block diagram showing a configuration of main parts of a control unit to be used in the topology of FIG. 1.
FIG. 5 is a chart showing waveforms of a line voltage and a load current in the topology of FIG. 1.
FIG. 6 is a graph showing an example of the change in effective value of an input current in the topology o FIG. 1.
FIG. 7 is a graph showing an example of the change in each capacitor voltage during initial charging in the topology of FIG. 1.
FIG. 8 is a flowchart illustrating control of a control unit in the topology of FIG. 1.

DETAILED DESCRIPTION

In general, a power conversion apparatus configured to connect to power supply lines of a three-phase AC power supply to which a load is connected, in parallel with the load, includes a multi-level converter and a controller. The multi-level converter includes clusters configured to connect to each of the power supply lines. The controller is configured to detect harmonic components of load currents flowing to the load, obtain compensation currents made to flow to each of the power supply lines to suppress the harmonic components of the load currents flowing to the load, and control output voltages of the clusters of the multi-level converter to obtain the compensation currents. The controller is configured to compare each of effective values of currents between the power supply lines and the clusters of the multi-level converter with a threshold value, and control values of the compensation currents such that the effective values of the currents fall within the threshold value.

A detail description of the teachings of the present disclosure is made hereinafter with reference to the accompanying drawings.

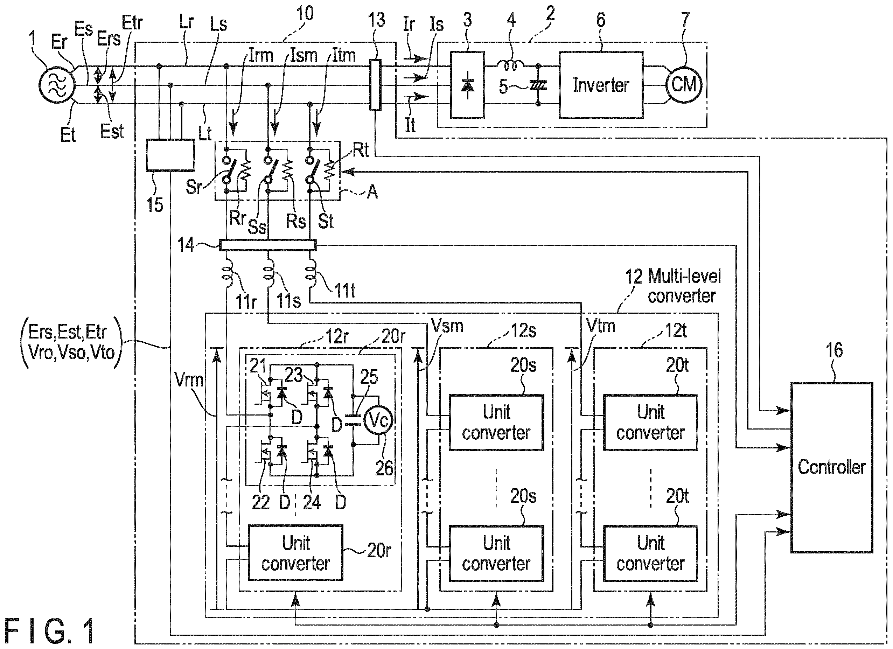

As shown in FIG. 1, for example, an air conditioning apparatus 2 which is a load is connected to R-, S-, and T-phase power supply lines (first, second, and third power supply lines) Lr, Ls, and Lt of a three-phase AC power supply 1. The air conditioning apparatus 2 includes a rectifier circuit 3 that rectifies power supply voltages Er, Es, and Et of the power supply lines Lr, Ls, and Lt by a plurality of diodes in bridge connection, a DC capacitor 5 to which an output voltage of the rectifier circuit 3 is applied via a DC reactor 4, an inverter 6 to which a voltage of the DC capacitor 5 is converted into an AC voltage of a predetermined frequency and is output, a compressor motor 7 that is operated by the output of the inverter 6, and the like.

A power conversion apparatus 10 is connected to the power supply lines Lr, Ls, and Lt to which the air conditioning apparatus 2 is connected, in parallel with the air conditioning apparatus 2.

The power conversion apparatus 10 includes an initial charging circuit A, buffer reactors 11r, 11s, and 11t, clusters (first, second, and third clusters) 12r, 12s, and 12t having one-side ends connected to the power supply lines Lr, Ls, and Lt via the initial charging circuit A and the buffer reactors 11r, 11s, and 11t and having the other ends interconnected (star connection), a detection section (first detection section) 13 which is located on the air conditioning apparatus 2 side with respect to the connection position of the initial charging circuit A in the power supply lines Lr, Ls, and Lt to detect currents (load currents) Ir, Is, and It flowing to the power supply voltages Er, Es, and Et and the air conditioning apparatus 2, a detection section (second detection section) 14 which is arranged in current paths between the initial charging circuit A and the buffer reactors 11r, 11s, and 11t to detect currents Irm, Ism, and Itm flowing between the power supply lines Lr, Ls, and Lt and the clusters 12r, 12s, and 12t, a detection section 15 which is connected to the power supply lines Lr, Ls, and Lt to detect the zero crossing point of line voltages Ers, Est, and Etr, and a controller 16 which controls the clusters 12r, 12s, and 12t according to the detection results of the detection sections 13, 14, and 15. A multi-level converter 12 is composed of clusters 12r, 12s, and 12t. The controller 16 controls the multi-level converter 12.

The above initial charging circuit A includes resistors Rr, Rs, and Rt inserted into current paths between the power lines Lr, Ls, and Lt and the buffer reactors 11r, 11s, and 11t, and switchgear Sr, Ss, and St connected in parallel to the resistors Rr, Rs, and Rt. and St. The switchgear Sr, Ss, and St is relay contacts or semiconductor switches whose opening and closing are controlled by the controller 16, forms current paths for charging the capacitor via the resistors Rr, Rs, and Rt by continuing the off state which has been made at the power-on of the three-phase AC power supply 1, and forms bypass current paths for the resistors Rr, Rs, and Rt by turning on after a predetermined time has elapsed after the power-on. The predetermined time is the time required for the capacitor 25 in each of unit converters 20r to 20t in the clusters 12r, 12s, and 12t to be sufficiently charged. The resistors Rr, Rs, and Rt may be replaced with a plurality of positive characteristic thermistors.

The above cluster 12r connected to the power supply line Lr is a so-called multi-series converter cluster in which a plurality of unit converters (cells) 20r each selectively generating and outputting a plurality of levels of (multi-level) DC voltages are connected in series (cascade connection), and generates and outputs an AC voltage Vrm with a waveform similar to a sine wave to reduce harmonics by summing output voltages (cell output voltages) of the respective unit converters 20r.

Each unit converter 20r includes a pair of output terminals, switch elements 21, 22, 23, and 24 each including a parasitic diode D, a capacitor (DC capacitor) 25 connected to the pair of output terminals via the switch elements 21 to 24, a voltage detection section 26 which detects a voltage (capacitor voltage) Vc of the capacitor 25 and notifies the controller 16 of the voltage, and the like, and generates and outputs DC voltages of a plurality of levels (positive, zero, and negative levels) by selective formation of a plurality of current paths caused by turning on and off (opening and closing) the switch elements 21 to 24. The switch elements 21 to 24 are semiconductor switch elements and, for example, MOSFETs or IGBTs are used as the switch elements.

The above cluster 12s connected to the power supply line Ls is a so-called multi-series converter cluster in which a plurality of unit converters 20s each selectively generating and outputting a plurality of levels of DC voltages are connected in series, and generates and outputs an AC voltage Vsm with a waveform similar to a sine wave to reduce harmonics by summing output voltages (cell output voltages) of the respective unit converters 20s. A configuration of each unit converter 20s is the same as that of each unit converter 20r.

The above cluster 12t connected to the power supply line Lt is a so-called multi-series converter cluster in which a plurality of unit converters 20t each selectively generating and outputting a plurality of levels of DC voltages are connected in series, and generates and outputs an AC voltage Vtm with a waveform similar to a sine wave to reduce harmonics by summing output voltages (cell output voltages) of the respective unit converters 20t. A configuration of each unit converter 20t is the same as that of each unit converter 20r.

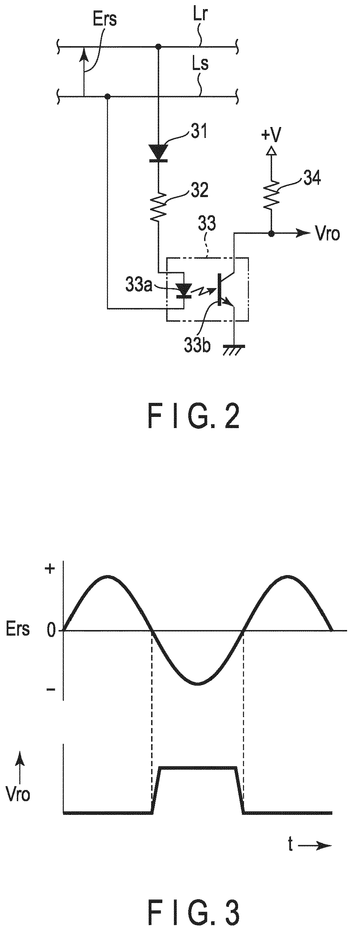

The above detection section 15 detects the zero crossing points of the line voltages Ers, Est, and Etr and includes zero crossing point detection circuits of the configuration shown in FIG. 2 for three phases. Configurations of these zero crossing point detection circuits are the same as each other. The configuration of the zero crossing point detection circuit for the line voltage Ers is shown in FIG. 2 as a representative example.

The zero crossing point detection circuit for the line voltage Ers adds the line voltage Ers of the power supply lines Lr and Ls to a photodiode 33a of a photocoupler 33 via a diode 31 and a resistor 32, adds a constant DC voltage V between a collector and an emitter of a phototransistor 33b of the photocoupler 33 via a resistor 34, and outputs a voltage Vro generated between the collector and emitter of the phototransistor 33b as a zero crossing point detection signal. In other words, the photodiode 33a repeatedly emitting and quenching light in response to changes in the line voltage Ers, and outputs the zero crossing point detection signal Vro of the waveform whose voltage changes between high and low levels at each zero crossing point of the line voltage Ers as shown in FIG. 3 by turning on and off the phototransistor 33b in accordance with the light emission and quenching.

The point at which the zero crossing point detection signal Vro changes from a high level to a low level and changes from a low level to a high level is the zero crossing point. Similarly, the zero crossing point detection circuit for the line voltage Est outputs a zero crossing point detection signal Vso, and the zero crossing point detection circuit for the line voltage Etr outputs a zero crossing point detection signal Vto.

The controller 16 detects harmonic components of the load currents Ir, Is, and It detected in detection section 13 to make currents flowing to the power supply, i.e., currents (Ir+Irm), (Is+Ism), and (It+Itm) to be described below as close as possible to sine waves synchronized with the power supply voltages Er, Es, and Et, calculates compensation currents (compensation currents to be added to the load currents Ir, Is, and It) which need to flow to power supply lines Lr, Ls, and Lt to suppress the harmonic components, calculates the output voltages (AC voltages) Vrm, Vsm, and Vtm of the multi-level converter necessary to obtain the compensation currents, and controls switching of each of the unit converters 20r to 20t in the multi-level converter 12 to obtain the output voltages Vrm, Vsm, and Vtm.

The harmonic components included in the load currents Ir, Is, and It can be suppressed by supplying the AC voltages Vrm, Vsm, and Vtm from the multi-level converter 12 to the power supply lines Lr, Ls, and Lt. In other words, the power conversion apparatus 10 operates as a so-called active filter.

In particular, the controller 16 controls (feedback control) the values of the above compensation currents such that the effective values of the currents Irm, Ism, and Itm flowing between the power supply lines Lr, Ls, and Lt and the multi-level converter 12 fall within a threshold value (predetermined upper limit). The currents Irm, Ism, and Itm are hereinafter referred to as the input currents to the multi-level converter 12.

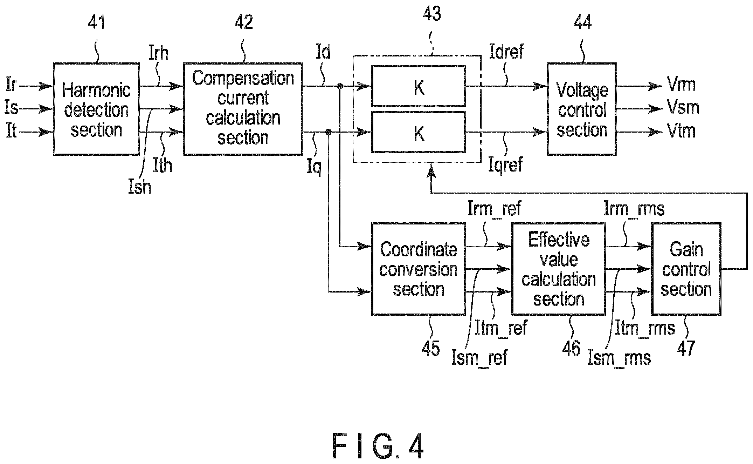

The controller 16 includes as specific means for performing these controls, a harmonic detection section 41, a compensation current calculation section 42, a gain multiplication section 43, a voltage control section 44, a coordinate conversion section 45, an effective value calculation section 46, and a gain control section 47 as shown in FIG. 4.

The harmonic detection section 41 detects harmonic components Irh, Ish, and Ith of the load currents Ir, Is, and It detected by the detection section 13. The compensation current calculation section 42 calculates command values (referred to as compensation current command values) Id and Iq on rotary coordinate axes of compensation current (compensation to be added to the load currents Ir, Is, and It) which are to flow to the power supply lines Lr, Ls, and Lt to suppress the harmonic components Irh, Ish, and Ith detected by the harmonic detection section 41. The gain multiplication section 43 multiplies the compensation current command values Id and Iq calculated in the compensation current calculation section 42 by gain K, and outputs results of the multiplication as compensation current command values Idref and Iqref. The voltage control section 44 calculates the output voltages (AC voltages) Vrm, Vsm, and Vtm of the multi-level converter 12 required to generate the input currents Irm, Ism, and Itm following the compensation current command values Idref and Iqref output from the gain multiplication section 43.

The controller 16 controls the output voltages of the unit converters 20r to 20t in the multilevel converter 12 such that the output voltages Vrm, Vsm, and Vtm calculated in the voltage control section 44 can be obtained by the multi-level converter 12.

The coordinate conversion section 45 converts the compensation current command values Id and Iq calculated in the compensation current calculation section 42 into input current command values Irm_ref, Ism_ref, and Itm_ref on the stationary coordinate axes by coordinate conversion. The effective value calculation section 46 calculates effective values Irm_rms, Ism_rms, and Itm_rms of the current input currents Irm, Ism, and Itm to the multi-level converter 12, based on the input current command values Irm_ref, Ism_ref, and Itm_ref obtained in the coordinate conversion section 45.

The gain control section 47 compares the effective values Irm_rms, Ism_rms, and Itm_rms calculated in the effective value calculation section 46 with a predetermined threshold value Im, and controls the gain K of the multiplication section 43 in accordance with results of the comparison. More specifically, the gain control section 47 sets the gain K to "1" when the effective values Irm_rms, Ism_rms, and Itm_rms are less than or equal to the threshold value Im (K = "1"). More specifically, if any of the effective values Irm_rms, Ism_rms, and Itm_rms is greater than the threshold value Im, the gain control section 47 sets a ratio of the threshold value Im to the maximum value among the effective values Irm_rms, Ism_rms, and Itm_rms (Im / maximum effective value) as the gain K (= less than "1").

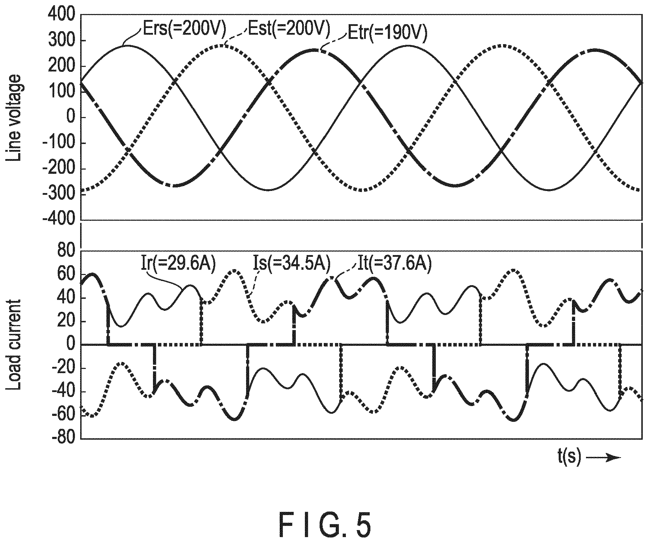

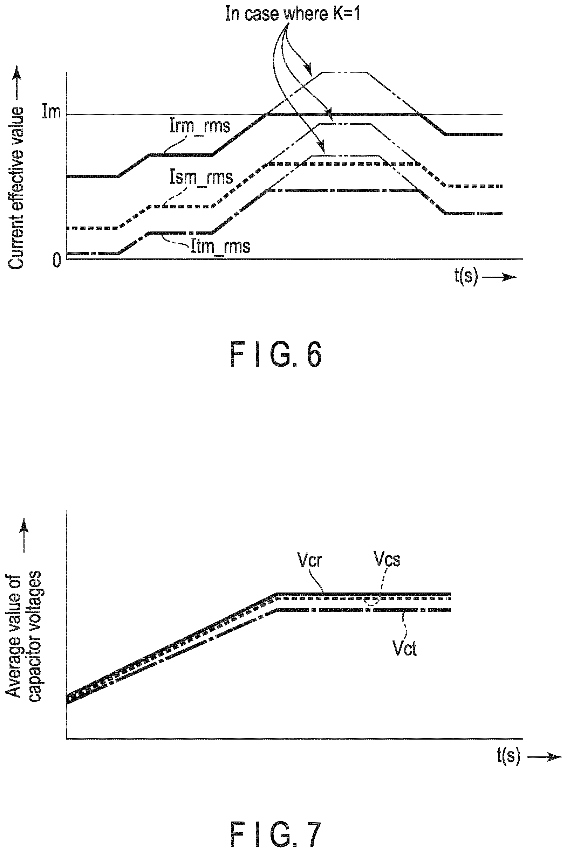

Examples of the line voltages Ers, Est, and Etr and the load currents Ir, Is, and It in a case where the power supply voltages Er, Es, and Et are in an unbalanced state are shown in FIG. 5, and examples of accompanying changes in the effective values Irm_rms, Ism_rms, and Itm_rms of the input currents Irm, Ism, and Itm are shown in FIG. 6.

In other words, when the power supply voltages Er, Es, and Et are in an unbalanced state, the load currents Ir, Is, and It become unbalanced. Since the multi-level converter 12 outputs the currents Irm, Ism, and Itm that compensate for the unbalanced load currents Ir, Is, and Itm, the currents may be concentrated in clusters of specific phases, and the effective value Ir_rms of the input current Irm may rise significantly and exceed the threshold value Im as shown in, for example, FIG. 6, which may lead to the destruction of the switch elements 21 to 24 of the respective unit converters 20r in the cluster 12r and the decrease in life of the capacitor 25.

Therefore, when the effective value Irm_rms of the input current Irm reaches the threshold value Im, the gain K to the compensation current command values Id and Iq for harmonic suppression is set to a value less than the usual "1" such that the effective value Irm_rms of the input current Irm can be suppressed below the threshold value Im. The ratio of the threshold value Im to the maximum value among the effective values Irm_rms, Ism_rms, and Itm_rms (Im / maximum effective value) is set as the gain K. This setting allows the current indicating the maximum value among the effective values Irm_rms, Ism_rms, and Itm_rms to fall within the threshold value Im.

The currents of the effective values that are not the maximum are controlled to lower values in accordance with the decrease of the gain K. Each of the effective values Irm_rms, Ism_rms, and Itm_rms is reduced by a uniform ratio (gain K). The compensation currents for harmonic suppression are reduced by the same ratio. The destruction of the switch elements 21 to 24 of the respective unit converters 20r in the cluster 12r and the decrease in life of the capacitor 25 can be thereby prevented.

Changes in the capacitor voltages Vc at initial charging of each of the capacitors 25 in the clusters 12r, 12s, and 12t in a case where the power supply voltages Er, Es, and Et are in the unbalanced state are shown in FIG. 7. Vcr is an average value of the capacitor voltages Vc in the multi-level converter 12r, Vcs is an average value of the capacitor voltage Vc in the multi-level converter 12s, and Vet is an average value of the capacitor voltages Vc in the multi-level converter 12t. In this example, the average capacitor voltage values Vcr and Vcs remain substantially the same, while the average capacitor voltage value Vct is lower than the average capacitor voltage values Vcr and Vcs. In other words, the average capacitor voltage values Vcr, Vcs, and Vet become unbalanced.

The controller 16 obtains the line voltages Ers, Est, and Etr by the following computation using the zero crossing point signals Vro, Vso, and Vto obtained in the detection section 15, the average value Vcr of the capacitor voltages Vc detected in the voltage detection sections 26 of the respective unit converters 20r in the cluster 12r, the average value Vcs of the capacitor voltages Vc detected in the voltage detection sections 26 of the respective unit converters 20s in the cluster 12s, the average value Vcs of the capacitor voltages Vc detected in the voltage detection sections 26 of the respective unit converters 20t in the cluster 12t, number N of the unit converters 20r in the cluster 12r, number N of the unit converters 20s in the cluster 12s, and number N of the unit converters 20t in the cluster 12t. √2 is a square root of "2".

$$ Ers = (Vcr - Vcs) \times N / \sqrt{2} $$

$$ Est = (Vcs - Vct) \times N / \sqrt{2} $$

$$ Etr = (Vct - Vcr) \times N / \sqrt{2} $$

Then, controller 16 calculates the unbalance rate by the following equation using the obtained line voltages Ers, Est, and Etr.

Unbalance rate = (Maximum value of differences between line voltages Ers, Est, and Etr and average voltage Eave)/(Average voltage Eave)×100%

The average voltage Eave is an average value of the line voltages Ers, Est, and Etr and is obtained as (Ers + Est + Etr) / 3. When a value obtained by dividing the largest value among differences (absolute values) between this average voltage Eave and the line voltages Ers, Est, Etr, i.e., Eave-Ers, Eave-Est, and Eave-Est by the average voltage Eave is expressed as a percentage, the value is the unbalance ratio.

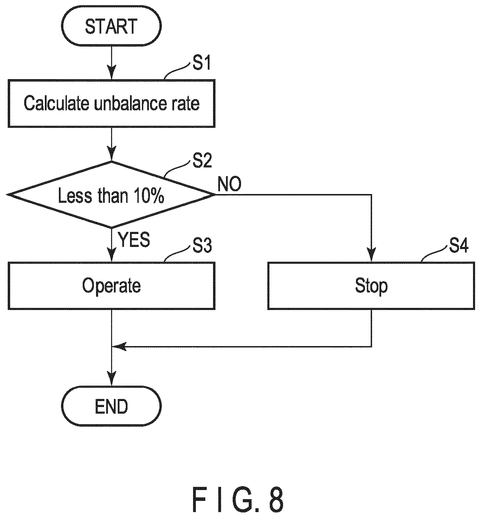

As shown in the flowchart of FIG. 8, the controller 16 calculates the unbalance rate of the power supply voltages Er, Es, and Et (S1) and determines whether the calculated unbalance rate is less than a set value, for example, less than 10% (S2).

If the unbalance rate is less than 10% (YES in S2), the controller 16 continues the operation of the multi-level converter 12 to reduce harmonics by determining that the effective values Irm_rms, Ism_rms, and Itm_rms of the input currents Irm, Ism, and Itm can be suppressed below the threshold value Im by controlling the gain K (S3).

If the unbalance rate is 10% or more (NO in S2), the controller 16 stops the multi-level converter 12 to protect the multi-level converter 12 by determining that it is difficult to suppress the effective values Irm_rms, Ism_rms, and Itm_rms of the input currents Irm, Ism, and Itm below the threshold value Im.

In the foregoing, a power conversion apparatus in which the other ends of the clusters 12r, 12s, and 12t are interconnected (star connection) has been described, but a power conversion apparatus in which the clusters 12r, 12s, and 12t are connected between the power supply lines Lr, Ls, and Lt, i.e., by so-called delta connection can also be carried out.

While certain embodiments have been described, these embodiments have been presented by way of example only, and are not intended to limit the scope of the inventions. Indeed, various omissions, substitutions and changes may be made, the resulting arrangements being part of the present invention as long as they do not contradict the appended claims (i.e. they comprise at least all features of at least one of the appended claims).

**Claims**

1. A power conversion apparatus configured to connect to power supply lines (Lr, Ls, and Lt) of a three-phase AC power supply (1) to which a load (2) is connected, in parallel with the load (2), the power conversion apparatus comprising:

   a multi-level converter (12) including clusters (12r, 12s, and 12t) configured to connect to each of the power supply lines (Lr, Ls, and Lt); and
   a controller (16) configured to detect harmonic components (Irh, Ish, and Ith) of load currents (Ir, Is, and It) flowing to the load (2), obtain compensation currents made to flow to each of the power supply lines (Lr, Ls, and Lt) to suppress the harmonic components (Irh, Ish, and Ith) of the load currents (Ir, Is, and It) flowing to the load (2), and control output voltages (Vrm, Vsm, and Vtm) of the clusters (12r, 12s, 12t) of the multi-level converter (12) to obtain the compensation currents,
   **characterized in that**
   the controller (16) is configured to compare each of effective values (Irm_rms, Ism_rms, and Itm_rms) of currents (Irm, Ism, and Itm) between the power supply lines (Lr, Ls, and Lt) and the clusters (12r, 12s, and 12t) of the multi-level converter (12) with a threshold value (Im), and control values of the compensation currents such that the effective values (Irm_rms, Ism_rms, and Itm_rms) of the currents (Irm, Ism, and Itm) fall within the threshold value (Im).

2. The apparatus according to claim 1, further comprising:

   a first detection section (13) configured to detect the load currents (Ir, Is, and It) flowing to the load (2); and
   a second detection section (14) configured to detect the currents (Irm, Ism, and Itm) between the power supply lines (Lr, Ls, and Lt) and the clusters (12r, 12s, and 12t) of the multi-level converter (12),
   and wherein
   the controller (16) includes:

   a harmonic detection section (41) configured to detect the harmonic components (Irh, Ish, and Ith) of the load current (Ir, Is, and It) detected by the first detection section (13);
   a compensation current calculation section (42) configured to calculate command values (Id and Iq) of the compensation currents made to flow to each of the power supply lines (Lr, Ls, and Lt) to suppress the harmonic components (Irh, Ish, and Ith) detected in the harmonic detection section (41);
   a gain multiplication section (43) configured to multiply the command values (Id and Iq) of the compensation currents calculated by the compensation current calculation section (42) by a gain (K), and output results of the multiplication as compensation current command values (Idref and Iqref);
   a voltage control section (44) configured to control the output voltages (Vrm, Vsm, and Vtm) of the clusters (12r, 12s, and 12t) of the multi-level converter (12) necessary to obtain the compensation currents following the compensation current command values (Idref and Iqref) output from the gain multiplication section (43);
   an effective value calculation section (46) configured to calculate the effective values (Irm_rms, Ism_rms, and Itm_rms) of the currents (Irm, Ism, and Itm) between the power supply lines (Lr, Ls, and Lt) and the clusters (12r, 12s, and 12t) of the multi-level converter (12); and
   a gain control section (47) configured to compare each of the effective values (Irm_rms, Ism_rms, and Itm_rms) calculated by the effective value calculation section (46) with the threshold value (Im) and control the gain (K) of the gain multiplication section (43) in accordance with a result of the comparison.

3. The apparatus according to claim 2, wherein when the effective values (Irm_rms, Ism_rms, and Itm_rms) calculated by the effective value calculation section (46) is less than or equal to the threshold value (Im), the gain control section (47) sets the gain (K) to "1", and when any of the effective values (Irm_rms, Ism_rms, and Itm_rms) calculated by the effective value calculation section (46) is larger than the threshold value (Im), the gain control section (47) sets a ratio of the threshold value (Im) to a maximum value of the effective values (Irm_rms, Ism_rms, and Itm_rms) as the gain (K).

4. The apparatus according to claim 1, wherein each of the clusters (12r, 12s, and 12t) is a multi-series converter cluster configured by connecting a plurality of unit converters (20r to 20t) in series.

5. The apparatus according to any one of claims 1 to 4, wherein

the controller (16) configured to calculate an unbalance rate of voltages (Er, Es, and Et) of the three-phase AC power supply (1), operate the multi-level converter (12) when the calculated unbalance rate is less than the set value, and stop the multi-level converter (12) when the calculated unbalance rate is larger than or equal to the set value.

6. The apparatus according to claim 2, further comprising:

a coordinate conversion section (45) configured to convert the command values (Id and Iq) of compensation currents calculated in the compensation current calculation section (42) into current command values (Irm_ref, Ism_ref, and Itm_ref) on the stationary coordinate axes by coordinate conversion;

wherein

the effective value calculation section (46) calculates the effective values (Irm_rms, Ism_rms, and Itm_rms) of the currents (Irm, Ism, and Itm) between the power supply lines (Lr, Ls, and Lt) and the clusters (12r, 12s, and 12t) of the multi-level converter (12), based on the current command values (Irm_ref, Ism_ref, and Itm_ref) obtained in the coordinate conversion section (45).

**Patentansprüche**

1. Leistungsumwandlungsvorrichtung, die mit Stromversorgungsleitungen (Lr, Ls und Lt) einer dreiphasigen Wechselstromversorgung (1), an die eine Last (2) angeschlossen ist, parallel zu der Last (2) verbunden ist, die Leistungsumwandlungsvorrichtung umfassend:

einen Multilevel-Konverter (12) mit Clustern (12r, 12s und 12t) ausgebildet zur Verbindung mit jeder der Stromversorgungsleitungen (Lr, Ls und Lt); und

eine Steuerung konfiguriert zur Erfassung von Oberwellenkomponenten (Ir, Is und It) von Ladeströmen, die zu der Last (2) fließen und Ausgangsspannung (Vrm, Vsm und Vtm) der Cluster (12r, 12s und 12t) des Multilevel-Konverters (12) zu steuern, um die Kompensationsströme zu erhalten,

**dadurch gekennzeichnet,**
**dass** die Steuerung (16) ausgebildet ist, jeden der Effektivwerte (Irm_rms, Ism_rms und Itm_rms) von Strömen (Irm, Ism und itm) zwischen den Stromversorgungsleitungen (Lr, Ls und Lt) und den Clustern (12r, 12s und 12t) mit dem Multilevel-Konverter (12) mit einem Schwellenwert (Im) zu verbgleichen, und die Werte der Kompensationsspannungen so zu steuern, dass die Effektivwerte (Irm_rms, Ism_rms und Itm_rms) der Ströme (Irm, Ism und itm) innerhalb des Schwellenwertes (Im) liegen.

2. Vorrichtung nach Anspruch 1, ferner umfassend:

einen ersten Erfassungsabschnitt (13) ausgebildet zum Erfassen der zur Last (2) fließenden Lastströme (Ir, Is und It); und
einen zweiten Erfassungsabschnitt (14) ausgebildet zum Erfassen der Ströme (Irm, Ism und Itm) zwischen den Stromversorgungsleitungen (Lr, Ls und Lt) und den Clustern (12r, 12s und 12t) des Multilevel-Konverters (12),
und wobei
die Steuerung (16) umfasst:

einen Oberwellenerfassungsabschnitt (41) ausgebildet zum Erfassen der Oberwellenkomponenten (Irh, Ish und Ith) des Ladestroms (Ir, Is und It) erfasst von dem ersten Erfassungsabschnitt (13);
einen Kompensationsstromberechnungsabschnitt (42), ausgebildet zum Berechnen von Steuerungswerten (Id und Iq) der Kompensationsströme, der zu jeder der Stromversorgungsleitungen (Lr, Ls und Lt) fließt, um die in dem Oberwellenerfassungsabschnitt (41) erfassten Oberwellenkomponenten (Irh, Ish und Ith) zu unterdrücken;
einen Verstärkungsmultiplikationsabschnitt (43) ausgebildet zum Multiplizieren der Steuerungswerte (Id and Iq) der von dem Kompensationsstromberechnungsabschnitt berechneten Kompensationsströme mit einer Verstärkung (K), und zum Ausgeben von Ergebnissen der Multiplikation als Kompensationsstromsteuerungswerte (Idref und Iqref),
einen Spannungssteuerabschnitt (44) ausgebildet zum Steuern der Ausgangsspannungen (Vrm, Vsm und Vtm) der Cluster (12r, 12s und 12t) des Multilevel-Wandlers (12), erforderlich, um die Kompensationsströme entsprechend den Kompensationsstromsteuerungswerten (Idref and Iqref) ausgegeben von dem Verstärkungsmultiplikationsabschnitt (43) zu erhalten;
einen Effektivwert-Berechnungsabschnitt (46) ausgebildet zum Berechnen der Effektivwerte (Irm_rms, Ism_rms und Itm_rms) der Ströme (Irm, Ism und Itm) zwischen den Stromversorgungsleitungen (Lr, Ls und Lt) und den Clustern (12r, 12s und 12t) des Multilevel-Wandlers (12); und
einen Verstärkungssteuerungsabschnitt (47) ausgebildet zum Vergleichen jeder der den von dem Effektivwert-Berechnungsabschnitt (46) berechneten Effektivwerte (Irm_rms, Ism_rms und Itm_rms) mit dem Schwellenwert (Im) und Steuerung der Verstärkung (K) des Verstärkungsmultiplikationsabschnitts (43) in Übereinstimmung mit einem Ergebnis des Vergleichs.

3. Vorrichtung nach Anspruch 2, wobei, wenn die von dem Effektivwert-Berechnungsabschnitt (46) berechneten Effektivwerte (Irm_rms, Ism_rms und Itm_rms) kleiner oder gleich dem Schwellenwert (Im) ist, setzt der Verstärkungssteuerabschnitt (47) die Verstärkung (K) auf "1", und wenn einer der von dem Effektivwert-Berechnungsabschnitt (46) berechneten Effektivwerte (Irm_rms, Ism_rms, und Itm_rms) größer als der Schwellenwert (Im) ist, setzt der Verstärkungssteuerungsabschnitt (47) ein Verhältnis des Schwellenwertes (Im) zu einem Maximalwert der Effektivwerte (Irm_rms, Ism_rms und Itm_rms) als die Verstärkung (K).

4. Die Vorrichtung nach Anspruch 1, wobei jeder der Cluster (12r, 12s und 12t) als Multiserien-Wandler-Cluster ausgebildet durch Verbindung mit einer Vielzahl von Einheiten-Konvertern (20r bis 20t) in Serie.

5. Die Vorrichtung nach einem der Ansprüche 1 bis 4, wobei
die Steuerung (16) ausgebildet ist zum Berechnen einer Unsymmetrie-Rate der Spannungen (Er, Es und Et) der dreiphasigen Wechselstromversorgung (1), zum Betreiben des Multi-Level-Konverter (12), wenn die berechnete Unsymmetrie-Rate kleiner als der eingestellte Wert ist, und zum Stoppen des Multi-Level-Konverters (12), wenn die berechnete Unsymmetrie-Rate größer als oder gleich dem eingestellten Wert ist.

6. Die Vorrichtung nach Anspruch 2, ferner umfassend:

einen Koordinatenumwandlungsabschnitt (45) ausgebildet zum Umwandeln der Sollwerte (Id und Iq) der in dem Kompensationsstrom-Berechnungsabschnitt (42) berechneten Kompensationsströme in Strom-Steuerungswerte (Irm ref, Ism ref und Itm ref) von der stationären Koordinaten Achsen von Koordinatenumrechnung;
wobei
der Effektivwert-Berechnungsabschnitt (46) die Effektivwerte (Irm_rms, Ism_rms und Itm_rms) der Ströme (Irm, Ism und Itm) zwischen den Stromversorgungsleitungen (Lr, Ls und Lt) und den Clustern (12r, 12s und 12t) des Multi-Level-Konverters (12) berechnet in Abhängigkeit der Effektivwerte in der Koordinatenumrechnung (45).

## Revendications

1. Appareil de conversion de puissance configuré pour se connecter à des lignes d'alimentation électrique (Lr, Ls, et Lt) d'une alimentation électrique CA triphasée (1) à laquelle une charge (2) est connectée parallèlement à la charge (2), l'appareil de conversion de puissance comprenant :

un convertisseur multiniveau (12) comportant des grappes (12r, 12s et 12t) configurées pour se connecter à chacune des lignes d'alimentation électrique (Lr, Ls, et Lt) ; et
un dispositif de commande (16) configuré pour détecter des composantes harmoniques (Irh, Ish, et Ith) des courants de charge (Ir, Is, et It) circulant vers la charge (2), obtenir des courants de compensation devant circuler dans chacune des lignes d'alimentation électrique (Lr, Ls, et Lt) pour supprimer les composantes harmoniques (Irh, Ish, et Ith) des courants de charge (Ir, Is, et It) circulant vers la charge (2), et commander les tensions de sortie (Vrm, Vsm, et Vtm) des grappes (12r, 12s, 12t) du convertisseur multiniveau (12) pour obtenir les courants de compensation,
**caractérisé en ce que**
le dispositif de commande (16) est configuré pour comparer chacune des valeurs effectives (Irm_rms, Ism_rms, et Itm_rms) des courants (Irm, Ism, et Itm) entre les lignes d'alimentation électrique (Lr, Ls, et Lt) et les grappes (12r, 12s et 12t) du convertisseur multiniveau (12) avec une valeur seuil (Im), et commander des valeurs des courants de compensation de sorte que les valeurs effectives (Irm_rms, Ism_rms, et Itm_rms) des courants (Irm, Ism, et Itm) se situent dans la valeur seuil (Im).

2. Appareil selon la revendication 1, comprenant en outre :

une première section de détection (13) configurée pour détecter les courants de charge (Ir, Is, et It) circulant vers la charge (2) ; et
une deuxième section de détection (14) configurée pour détecter les courants (Irm, Ism, et Itm) entre les lignes d'alimentation électrique (Lr, Ls, et Lt) et les grappes (12r, 12s, et 12t) du convertisseur multiniveau (12), et dans lequel le dispositif de commande (16) comporte :

une section de détection des harmoniques (41) configurée pour détecter les composantes harmoniques (Irh, Ish, et Ith) du courant de charge (Ir, Is, et It) détecté par la première section de détection (13) ;
une section de calcul de courant de compensation (42) configurée pour calculer des valeurs d'instruction (Id et Iq) des courants de compensation devant circuler dans chacune des lignes d'alimentation électrique (Lr, Ls, et Lt) pour supprimer les composantes harmoniques (Irh, Ish, et Ith) détectées dans la section de détection des harmoniques (41) ;
une section de multiplication de gain (43) configurée pour multiplier les valeurs d'instruction (Id et Iq) des courants de compensation calculés par la section de calcul de courant de compensation (42) par un gain (K), et délivrer les résultats de la multiplication sous forme de valeurs d'instruction de courant de compensation (Idref et Iqref) ;
une section de commande de tension (44) configurée pour commander les tensions de sortie (Vrm, Vsm, et Vtm) des grappes (12r, 12s et 12t) du convertisseur multiniveau (12) nécessaires pour obtenir les courants de compensation suivant les valeurs d'instruction de courant de compensation (Idref et Iqref) délivrées par la section de multiplication de gain (43) ;
une section de calcul de valeurs efficace (46) configurée pour calculer les valeurs effectives (Irm_rms, Ism_rms, et Itm_rms) des courants (Irm, Ism, et Itm) entre les lignes d'alimentation électrique (Lr, Ls, et Lt) et les grappes (12r, 12s, et 12t) du convertisseur multiniveau (12) ; et
une section de commande de gain (47) configurée pour comparer chacune des valeurs effectives (Irm_rms, Ism_rms, et Itm_rms) calculées par la section de calcul de valeurs efficace (46) avec la valeur seuil (Im) et commander le gain (K) de la section de multiplication de gain (43) conformément à un résultat de la comparaison.

3. Appareil selon la revendication 2, dans lequel lorsque les valeurs effectives (Irm_rms, Ism_rms, et Itm_rms) calculées par la section de calcul de valeurs efficace (46) sont inférieures ou égales à la valeur seuil (Im), la section de commande de gain (47) règle le gain (K) à "1", et lorsque l'une quelconque des valeurs effectives (Irm_rms, Ism_rms, et Itm_rms) calculées par la section de calcul de valeurs efficace (46) est supérieure à la valeur seuil (Im), la section de commande de gain (47) règle un rapport de la valeur seuil (Im) sur une valeur maximale des valeurs effectives (Irm_rms, Ism_rms, et Itm_rms) comme gain (K).

4. Appareil selon la revendication 1, dans lequel chacune des grappes (12r, 12s et 12t) est une grappe de convertisseurs multi-séries configurée en connectant une pluralité de convertisseurs unitaires (20r à 20t) en série.

5. Appareil selon l'une des revendications 1 à 4, dans lequel
le dispositif de commande (16) est configuré pour calculer un taux de déséquilibre des tensions (Er, Es, et Et) de l'alimentation électrique CA triphasée (1), faire fonctionner le convertisseur multiniveau (12) lorsque le taux de déséquilibre calculé est inférieur à la valeur de consigne, et arrêter le convertisseur multiniveau (12) lorsque le taux de déséquilibre calculé est supérieur ou égal à la valeur de consigne.

6. Appareil selon la revendication 2, comprenant en outre :

une section de conversion de coordonnées (45) configurée pour convertir les valeurs d'instruction (Id et Iq) de courants de compensation calculées dans la section de calcul de courant de compensation (42) en valeurs d'instruction de courant (Irm_ref, Ism_ref, et Itm_ref) sur les axes de coordonnées fixes par conversion de coordonnées ;
dans lequel
la section de calcul de valeurs efficace (46) calcule les valeurs effectives (Irm_rms, Ism_rms, et Itm_rms) des courants (Irm, Ism, et Itm) entre les lignes d'alimentation électrique (Lr, Ls, et Lt) et les grappes (12r, 12s et 12t) du convertisseur multiniveau (12), sur la base des valeurs d'instruction de courant (Irm_ref, Ism_ref, et Itm_ref) obtenues dans la section de conversion de coordonnées (45).

F I G. 1

EP 4 156 440 B1

EP 4 156 440 B1

F I G. 2

F I G. 3

F I G. 4

F I G. 5

FIG.6

FIG.7

```
        ┌─────────┐
        │  START  │
        └─────────┘
             │
             ▼            S1
    ┌────────────────────────┐
    │ Calculate unbalance rate│
    └────────────────────────┘
             │
             ▼            S2
         ╱─────────╲
        ╱           ╲  NO
       ╱ Less than 10%╲──────────┐
        ╲           ╱            │
         ╲─────────╱             │
             │ YES               │
             ▼       S3          ▼      S4
    ┌──────────────┐      ┌──────────────┐
    │   Operate    │      │    Stop      │
    └──────────────┘      └──────────────┘
             │                   │
             ◄───────────────────┘
             │
             ▼
        ┌─────────┐
        │   END   │
        └─────────┘
```

F I G. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5871832 B
- WO 2021186524 A1

- CN 111384716 A

### Non-patent literature cited in the description

- **MINYUAN GUAN et al.** Modeling and Control of a Modular Multilevel Converter-Based HVDC System Under Unbalanced Grid Conditions. *IEEE Transactions on Power Electronics,* vol. 27 (12), 4858-4867

- **HUANG H et al.** Active harmonic current elimination and reactive power compensation using modular multilevel cascaded converter. *2017 19th European Conference on Power Electronics and Applications (EPE'17 ECCE Europe)*